# EUROPEAN PATENT SPECIFICATION

(11) **EP 3 254 327 B1**
(45) Date of publication and mention of the grant of the patent: **02.01.2019**
(21) Application number: 16713613.4
(22) Date of filing: 26.01.2016
(51) Int. Cl.: H01M 8/16, H01M 4/90, H01M 12/08

(54) **BIOELECTROCHEMICAL ENERGY STORAGE DEVICE AND METHOD FOR BIOELECTROCHEMICAL ENERGY STORAGE**
BIOELEKTROCHEMISCHE ENERGIESPEICHERVORRICHTUNG UND VERFAHREN FÜR BIOELEKTROCHEMISCHE ENERGIESPEICHERUNG
DISPOSITIF DE STOCKAGE D'ÉNERGIE BIO-ÉLECTROCHIMIQUE ET PROCÉDÉ DE STOCKAGE D'ÉNERGIE BIO-ÉLECTROCHIMIQUE

(30) Priority: 06.02.2015 NL 2014248
(43) Date of publication of application: 13.12.2017
(73) Proprietor: Stichting Wetsus, European Centre of Excellence for Sustainable Water Technology, 8911 MA Leeuwarden (NL)
(72) Inventor: MOLENAAR, Sam Daniël, 8911 MA Leeuwarden (NL); SLEUTELS, Tomas Hubertus Johannes, 8911 MA Leeuwarden (NL); VAN APELDOORN-TER HEIJNE, Annemiek, 8911 MA Leeuwarden (NL); HAMELERS, Hubertus Victor Marie, 8911 MA Leeuwarden (NL); BUISMAN, Cees Jan Nico, 8911 MA Leeuwarden (NL)
(74) Representative: Verdijck, Gerardus
(86) International application number: PCT/NL2016/050061
(87) International publication number: WO 2016/126157

(56) References cited:
- WO-A1-2014/055671
- US-A1- 2011 318 610
- WANG YUN-HAI ET AL: "Electricity production from a bio-electrochemical cell for silver recovery in alkaline media", APPLIED ENERGY, vol. 112, 4 February 2013 (2013-02-04), pages 1337-1341, XP028731620, ISSN: 0306-2619, DOI: 10.1016/J.APENERGY.2013.01.012
- SLEUTELS T H J A ET AL: "Effect of mass and charge transport speed and direction in porous anodes on microbial electrolysis cell performance", BIORESOURCE TECHNOLOGY, ELSEVIER BV, GB, vol. 102, no. 1, 8 July 2010 (2010-07-08), pages 399-403, XP027368505, ISSN: 0960-8524 [retrieved on 2010-07-08]

## Description

The present invention relates to a method and device for bioelectrochemical storage of energy, with the device being capable of charging and discharging energy.

Temporarily storage of energy is important to enable storage of energy in a time period of an energy surplus and to enable providing additional energy in a time period of a high energy demand. Examples of energy storage include storing wind energy in water (level) buffers, for example. Another conventional example of such energy storage devices are (car) batteries. This is not a very sustainable approach considering the materials required for the batteries.

WO 2014/055671 A1 discloses a bioelectrochemical battery, wherein at the anode microbial activity provides electrons to an external circuit and the cathode is a solid state composition capable of receiving the electrons from the external circuit and changing from an oxidized cathode composition to a reduced cathode composition. Generation of electrical energy with such system requires a cathode that changes from an oxidized cathode to a reduced cathode composition. For regeneration of the cathode it is removed from the system and re-oxidized in a separate oxidation process.

Wang Yun-Hai et al. discloses in "Electricity production from a bio-electrochemical cell for silver recovery in alkaline media" the recovery of silver from ammonia chelated silver alkaline waste water, COD removal from acetate waste water and electricity production in a dual chamber bio-electrochemical cell.

Sleutels et al. discloses in "Effect of mass and charge transport speed and direction in porous anodes on microbial electrolysis cell performance" the use of porous electrodes like graphite felt as anode material.

US 2011/318610 discloses a process for producing hydrogen peroxide. In this process a hydrogen peroxide containing stream was recovered from the cathode.These conventional devices and systems do not provide an effective energy storage device and/or method that is sustainable and could be implemented on a wide scale, for example including house holds.

The use of bioelectrochemical devices is known for being capable of oxidizing carbohydrates anaerobically to carbon dioxide involving anode respiring biofilms (ARBs) that can be used in microbial fuel cells (MFCs) and microbial electrolysis cells (MECs). These devices are not capable of storing (external) energy. The present invention has for its object to provide an energy storage device, more particularly a bioelectrochemical energy storage device, capable of energy storage in time periods of an energy surplus and energy discharge in time periods of energy shortage and a method there for.

This objective is achieved with the method for bioelectrochemical energy storage and electrical energy generation according to the invention, the method comprising the steps of:
- providing a bioelectrochemical energy storage device comprising:
   - a housing having a first compartment and a second compartment;
   - a reversible bio-electrode that is placed in the first compartment and comprises a microbial biosystem capable of performing in a charging state a charging operation involving a reduction reaction converting electrical energy into chemical energy, and performing in a discharging state a discharging operation involving an oxidation reaction converting chemical energy into electrical energy; and
   - a counter electrode that is placed in the second compartment and is electrically connectable in a circuit with the reversible bio-electrode;
- performing a charging operation by providing electrons to the reversible bio-electrode to perform a reduction operation and converting electrical energy into chemical energy; and
- performing a discharging operation by extracting electrons from the reversible bio-electrode to perform an oxidation reaction and converting chemical energy into electrical energy.

The device that is used in the method according to the invention comprises a first and a second compartment. The first compartment is provided with a reversible bio-electrode. A counter electrode is placed in the second compartment. By providing a circuit the reversible bio-electrode and the counter electrode can be electrically connected. In a charging state of the device this circuit enables providing electrons at the reversible bio-electrode to perform a reduction reaction. For example, the reduction reaction may convert CO₂ electrochemically into organic molecules like methane and volatile fatty acids. Also, a combined electrochemical and biological reduction reaction/process is possible. For example, an electrochemical conversion into hydrogen that in a biological conversion is converted with bicarbonate into acetate is capable of storing energy in accordance with the present invention. This embodiment enables providing the biomass independent of the electrode and in stead thereof, or in addition thereto, providing the biomass in the suspension using the dissolved components. This electrode with suspended biomass provides a reversible bio-electrode in a system configuration. The bio-electrode in the system according to the invention also comprises such bio-electrode system. In fact, in the different embodiments of the invention electrical energy is converted into chemical energy, for example storing the electrical energy in organic molecules.

In a discharging state of the device organic molecules can be oxidized to CO₂, protons, and electrons that can be transferred by the circuit, for example.

Therefore, the method according to the invention stores electrical energy by converting electrical energy into chemical energy and produces electrical energy by converting chemical energy into electrical energy. This enables the bioelectrochemical energy storage device performing the method according to the invention to act as a bioelectrochemical battery, or biobattery, capable of storing and producing energy. More specifically, the storage of energy in a bioelectrochemical energy storage device performing bioelectrochemical energy storage and bioelectrochemical generation of electrical energy with the method according to the present invention enables higher specific energy densities and prolonged charge/discharge periods as compared to alternative conventional methods or systems including capacitive systems.

As a further advantage the method according to the present invention enables storing of energy that is safer and more cost effective as compared to many conventional devices or methods. In addition, the device capable of performing the method according to the invention can be regenerated, thereby enabling an effective use of the device under practical conditions. Furthermore, the device capable of performing the method according to the invention is capable of being provided as a stand-alone application, in other words as an off-grid application, thereby also enabling effective energy storage in remote areas, for example.

The oxidation and reduction reactions are preferably performed with the use of electro-active biofilms (EABs) that interact with conductive surfaces of an electrode and catalyse reduction and/or oxidation reactions as part of the metabolism. In the discharging and/or charging states different components may react in the oxidation and reduction reactions including organic and anorganic components. For example, anodes respiring biofilms (ARBs) are capable to oxidize carbohydrates anaerobically with the conductive material in the electrode as electron acceptor. In the discharging reaction, with the reversible bio-electrode(s) being connected to a counter electrode, electrical power can be obtained. Charge neutrality is being maintained with the use of ionic exchange, for example.

The reversible bio electrode is preferably made of a biocompatible material to enable microorganisms to catalyse the reactions. The electrodes preferably have a sufficiently high electric conductivity. Possible materials include graphite, carbon, and titanium etcetera. Optionally, additional use is made of a catalyst for conversion of CO₂ to organic material.

Preferably, the counter electrode should be capable to switch between the different states. The counter electrode preferably comprises a material with a high capacity and/or a large surface area that cooperates with an electrolyte solution in the compartment. For example, the counter electrode may comprise Mn having Na⁺ as counter ion. The use of other materials in the device capable of performing the method according to the invention could also be envisaged. Alternatively, or in addition, a suitable reversible biological reaction can be performed at the counter electrode when the device according to the invention is in use.

Both electrodes should preferably be anodic and cathodic stable such that the electrodes do not react at the potential that is applied in the charging and/or discharging state of the bioelectrochemical energy storage device that is capable of performing the method according to the invention.

In a presently preferred embodiment of the invention oxidation and reduction of acetate is performed. According to a presently preferred embodiment according to the invention electrical energy is stored as chemical energy by coupling the bioelectrochemical production of acetate to positively charging the capacitive slurry and/or other material in the device, and electrical energy is generated from the stored chemical energy by coupling the bioelectrochemical oxidation of acetate to carbonate to the discharging of the positively charged capacitive slurry and/or other material in the device. Optionally, this slurry and/or other material is circulated over the device. In addition, or alternatively, butyrate, propionate and other components can be applied. In principle organic components can be used provided that they can be reversibly produced. Optionally, other processes, such as hydrolyses and fermentation, are used to convert longer chains into for example acetate that can be oxidized to electrons.

In the oxidation of an organic substrate a large amount of acid can be produced. For example, if acetate is oxidized, every mole of acetate produces 8 moles of protons that could significantly change the pH of the system. Preferably, buffer capacity in the system should be sufficiently high to compensate for the acid production, and/or compensation should be provided by adding or generating alkalinity, and/or by ion transport of protons through the membrane. In addition, or as an alternative thereto, extremophiles can be used on the reversible bio-electrodes that are capable of dealing with these pH changes.

It will be understood that the device that is used according to the present invention may comprise more than two compartments with one or more electrodes and/or more than one electrode can be provided in one compartment. The specific configuration can be chosen dependent on required dimensions and/or amounts of energy that should be stored, for example.

Preferably, the method comprises the step of providing the bioelectrochemical energy storage device with an ion-exchange membrane separating the first and second compartment.

By providing an ion-exchange membrane charge neutrality in the housing is maintained by ionic exchange through the membrane. The ion-exchange membrane may comprise an anionic exchange membrane, a cation exchange membrane and/or a bipolar membrane comprising a cation and anion layer, for example. The use of such membrane provides an effective means to achieve charge neutrality in the housing and enable electricity generation in the discharging state and storage of chemical energy in a charging state of the bioelectrochemical energy storage device. For example, when applying acetate in the method and/or device according to the invention, the membrane is preferably a proton selective membrane to enhance the aforementioned compensating effect.

To enable transport of charge in the compartments an appropriate electrolyte is preferably applied in the compartment. For example, in a presently preferred embodiment of the invention the second compartment with the counter electrode is provided with Fe³⁺/Fe²⁺, Cu²⁺/Cu, and/or Ag/AgCl.

In a presently preferred embodiment according to the invention the counter electrode comprises a capacitive electrode.

By providing a capacitive electrode a relatively simple counter electrode is achieved with a sufficient capacity. Preferably, the capacitive counter electrode is chosen in relation to the specific electrolyte composition in the second compartment. In such embodiment ions of the electrolyte may achieve a so-called double layer providing an overall capacity of the capacitive counter electrode. The capacitive electrode is capable of storing ions and conducting electrons. The capacitive electrodes used in the method and/or provided in the system according to the invention are capable of storing a significant surplus of either cations or anions in its porous structure and therefore store a net electrical charge. This would not be possible with conventional (non-capacitive) electrodes. In the capacitive electrodes the charge is balanced by electrons, which are stored in a conductive part of the electrode. The capacitive electrode can transfer an ionic current into an electrical current without the presence of a redox reaction. In addition, this enables the capacitive electrodes as used in the system according to the invention to use the stored charge in a later stage, as self-discharge in the capacitive electrodes is kept to a minimum, to facilitate the electricity production. The capacitive electrodes for this invention, which may act as super-capacitors, can be either double layer capacitors or pseudo-capacitors (or a hybrid capacitor). The current collector should be a conductive material, such a graphite or platinum (galvanized). As ingredients for capacitive materials, one can choose for example activated carbon, that is used in a presently preferred embodiment according to the invention, and alternatively, or in combination with activated carbon, carbon nanotubes, graphene or ceramic materials such as MnO₂, RuO₂. The capacitive electrodes as used in a presently preferred embodiment according to the invention preferably have a capacity of at least 1000 Farad per m² of electrode for an effective operation.

In a presently preferred embodiment the first compartment is provided with organic material through an organic material input.

By providing an organic material input organic material can be supplied to the first compartment. This enables increasing the capacity of the bioelectrochemical energy storage device during use and/or enables regeneration of the relevant components in the first compartment of the bioelectrochemical energy storage device. In one of the presently preferred embodiments the organic material comprises carbohydrates. It will be understood that other organic material could also be used in the system according to the invention, for example including protein and/of fats.

In a presently preferred embodiment according to the present invention the microbial biosystem comprises a unitary biosystem capable of performing both the oxidation and reduction reactions.

By providing a unitary biosystem it is possible to perform both the oxidation and reduction reactions in the charging and discharging state of the energy storing device. This has the advantage that only one biosystem is required.

In a further presently preferred embodiment according to the present invention the microbial biosystem comprises a multiple biosystem with a first bio-subsystem capable of performing the oxidation reaction and a second bio-subsystem, at least partly different from the first bio-subsystem, capable of performing the reduction reaction.

By providing at least two bio-subsystems the oxidation reaction and the reduction reactions can be optimized using specific microbial sub-systems that are dedicated to either the oxidation reaction or the reduction reaction. This optimizes the overall performance of the bioelectrochemical energy storage device performing the method according to the present invention.

In a further presently preferred embodiment according to the present invention the device is configured to store above 10 kWh/m³, more preferably above 12.5 kWh/m³, and most preferably above 15 kWh/m³ when performing the method according to the invention.

By providing a storage device capable of storing energy at a energy density of preferably above 15 kWh/m³ an effective and efficient storage is provided. In one of the presently preferred embodiments according to the invention use is made of acetate in the device. In a device according to such preferred embodiment efficient energy storage is enabled with a biological conversion rate of acetate to electrons of about 25 A/m².

In a further presently preferred embodiment according to the present invention the first and/or second compartments are separated into an oxidation sub-compartment and a reduction sub-compartment.

By separating the consumption and production of electrons in different sub-compartments, including different (sub)-reactors, undesired competition of both reactions is prevented. Preferably, electrolyte is circulated over the sub-compartments.

In a presently preferred embodiment the charging and discharging operations are performed under anaerobic conditions. This enables the use of anaerobic microorganisms in the anaerobic biosystem and/or bio-subsystems.

Preferably, the first compartment is provided with carbohydrates capable of anaerobic oxidation for converting chemical energy into electrical energy. It was shown that the use of carbohydrates enables an efficient storage of energy. Preferably, acetate is provided to the first compartment enabling efficient charging and discharging of the device. It will be understood that other components, preferably other organic material, can also be applied as mentioned in relation to the device.

In a presently preferred embodiment the method comprises the additional step of providing a first compartment with organic material to add additional energy to the system and/or recharge the system. This provides an effective means to increase the overall capacity of the system and/or recharge or regenerate the system when in use. In a presently preferred embodiment, for recharging the system use is made of ethanol, including the use of bio-ethanol.

Preferably, the method is performed to enable local semi-off-grid or local off-grid energy storage without being dependent on the electricity grid. This provides a method and device capable of acting as a stand-alone device under a wide range of circumstances, including any household applications.

The invention further relates to a device for bioelectrochemical energy storage, the device comprising:
- a housing having a first compartment and a second compartment;
- a reversible bio-electrode that is placed in the first compartment and comprises a microbial biosystem capable of performing in a charging state a charging operation involving a reduction reaction converting electrical energy into chemical energy, and performing in a discharging state a discharging operation involving an oxidation reaction converting chemical energy into electrical energy; and
- a counter electrode that is placed in the second compartment and is electrically connectable in a circuit with the reversible bio-electrode.

The device provides the same effects and advantages as described for the method. The device is capable of performing one or more of the embodiments of the described method. More specifically, the device enables storage of energy in a charging state, more specifically storage of energy as chemical energy in a time period of an energy surplus, and providing electrical energy in a discharging state by converting (chemical) components in a time period of energy shortage. This provides an effective means to store energy.

In a presently preferred embodiment the microbial biosystem comprises a unitary bio-system capable of performing both the oxidation and reduction reactions. Alternatively, the microbial bio-system comprises a multiple bio-system with a first bio-subsystem capable of performing the oxidation reaction and a second bio-subsystem, at least partly different from the first bio-subsystem, capable of performing the reduction reaction. Preferably, the bioelectrochemical energy storage device according to one or more of the embodiments of the invention is configured to store above 10 kWh/m³, more preferably above 12.5 kWh/m³, and most preferably above 15 kWh/m³. Other embodiments of the device according to the invention comprise one or more of the elements enabling one or more of the method steps according to one or more of the embodiments of the method according to the invention.

In one of the presently preferred embodiments according to the invention the reversible bio-electrode comprises a charging sub-electrode comprising a first microbial biosystem capable of performing in a charging state a charging operation involving a reduction reaction converting electrical energy into chemical energy, and comprising a discharging sub-electrode comprising a second microbial biosystem capable of performing in a discharging state a discharging operation involving an oxidation reaction converting chemical energy into electrical energy.

By separating the reversible bio-electrode (system) in a charging sub-electrode and a discharging sub-electrode dedicated bio-electrodes can be provided. For example, for charging an Acetogen can be used and for discharging Geobacter Sulphur Reducens. It will be understood that other systems could also be envisaged in accordance with the invention. The counter electrode is separated from the sub-electrodes with a number of membranes (CEM). The electrodes are preferably connected in a circuit comprising sub-circuits that are activated depending on the state of the system, or alternatively the electrodes are connected in independent circuits that are activated or de-activated. Preferably, the counter electrode is placed in a flow compartment enabling a flow through the compartment and along the electrode. Preferably, the flow comprises a slurry. According to an associated method according to the present invention the device with reversible bio-electrode system comprising at least two different sub-electrodes is controlled with a state controller. The controller may determine the state of the system, for example depending on the supply or demand of electrical energy. This enables an effective operation of the device. Preferably, a slurry is circulated in the flow compartment therewith achieving a rechargeable bio-flow cell for energy storage and generation.

Further advantages, features and details of the invention are elucidated on the basis of preferred embodiments thereof, wherein reference is made to the accompanying drawings, in which:
- figure 1 shows a bioelectrochemical energy storage device according to the present invention;

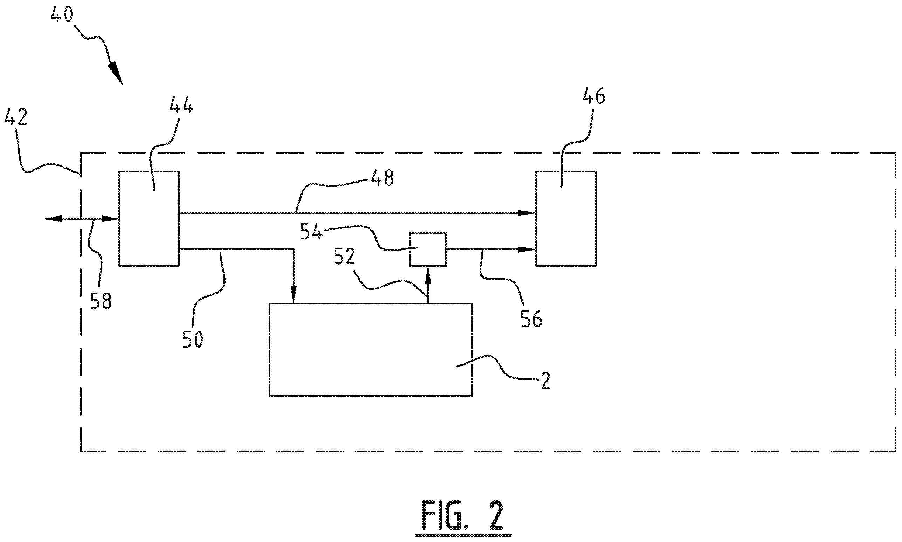

- figure 2 shows a schematic overview of components in a system with the bioelectrochemical energy storage device of figure 1; and
- figure 3 shows an alternative embodiment according to the invention.

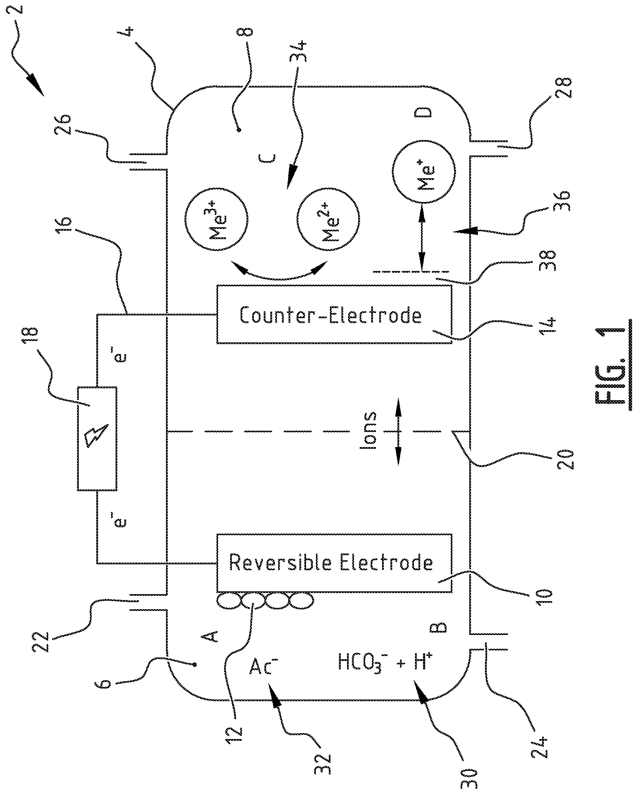

The bioelectrochemical energy storage device 2 (figure 1) comprises tank or vessel 4 as a housing comprising first compartment 6 and second compartment 8. First compartment 6 comprises first reversible electrode 10 with biofilm 12. Second compartment 8 comprises counter electrode 14. Electrodes 10, 14 are connected through circuit 16. Circuit 16 comprises source/resistance 18.

In the illustrated embodiment first compartment 6 and second compartment 8 are separated with ion exchange membrane 20. First compartment 6 is provided with inlet 22 that is preferably configured to enable supply of organic material. First compartment 6 is further provided with outlet 24. Also second compartment 8 is provided with inlet 26 and outlet 28. It will be understood that an alternative configuration of inlets and outlets could be envisaged by a skilled person. Organic material including HC03 30 and further components 32, such as Ac , are provided in first compartment 6. In second compartment 8 material is converted in conversion reaction 34. In the illustrated embodiment conversion 34 involves converting Me²⁺ into Me³⁺ or vice versa, and an attraction effect 36 on Me⁺ enabling a double layer 38 on counter electrode 14.

Energy system 40 comprises bioelectrochemical energy storage device 2 in a local system 42 that can be used in a house, for example. Energy source 44, such as a solar panel or wind turbine, is provided and consumer 46, such as an apparatus in the house of local system 42, uses energy. Energy is supplied through connection 48 from source 44 to user 46. In a time period of an energy surplus, energy is supplied through connection 50 from source 44 to device 2. In a time period of an energy shortage, energy is supplied from device 2 through connection 52, an optional convertor 54 and connection 56 to user 46. Optionally, an additional connection 58 to the electrical grid or other network is provided to local system 42. Connection 58 may connect to source 44 and/or device 2 and/or user 46.

In a time period of energy surplus electricity is supplied to device 2. Electrons are provided at reversible bio-electrode 10 and a reduction reaction converts electrical energy into chemical energy with the use of biofilm 12. In a time period of an energy shortage the chemical components are converted into electrical energy with an oxidation reaction and energy is supplied from device 2 to a user 46.

Experiments have been performed with device 2. In one of these experiments acetate was used and it was shown that energy storage was possible with device 2. In theory, a maximum of 200 kWh/m³ can be stored in device 2. The theoretical cell voltage is about 1.1 Volts depending on the potential of the counter reaction. The biological conversion of acetate to electrons is possible at a rate of 25 A/m², also depending on the counter reaction. It will be understood that the actual performance may depend on the design and materials used for device 2 that may chosen dependent on the intended use of device 2.

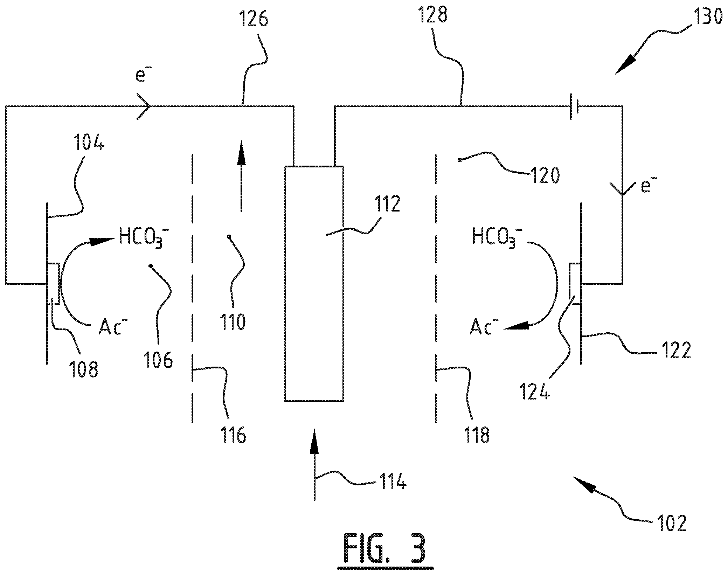

System 102 (figure 3), acting as a rechargeable bio-flow cell, as schematically illustrated shows the operation in both a discharging and charging state. System 102 comprises a rechargeable electrode system with at least two sub-electrodes. In the illustrated overview in a discharging state (left hand side of figure 3) flow system 102 comprises bio-anode 104 in electrode compartment 106 with Geobacter Sulphur Reducens or similar. Furthermore, flow system 102 comprises compartment 110 that is filled with slurry that is circulated in direction 114, and is provided with electrode 112. In a presently preferred embodiment the slurry can be charged with about 100 Faraday/g. Electrode compartment 106 is separated from compartment 110 by membrane (CEM) 116. Circuit 126 connects electrodes 104, 112. For generation of electrical energy Ac is converted into HCO₃⁻ . In a charging state (right hand side of figure 3) membrane (CEM) 118 separates compartment 110 from electrode compartment 120 with electrode 122 with Acetogen, or a similar microorganism. Circuit 128 connects power supply 130 with electrodes 112, 122. For storing energy HCO₃⁻ is converted into Ac and electrode 112 is positively charged. System 102 enables the use of a separate bio-electrode for acetate production, i.e. bio-electrode 122, and acetate conversion, i.e. bio-electrode 104. Depending on the state of system 102 one of the electrodes 104, 122 is activated. This enables an effective storage and generation of energy in a single system.

The present invention is by no means limited to the above described preferred embodiments thereof. The rights sought are defined by the following claims, within the scope of which many modifications can be envisaged.

## Claims

1. Method for bioelectrochemical energy storage and electrical energy generation, comprising the steps of:
- providing a bioelectrochemical energy storage device (2), the device (2) comprising:
- a housing (4) having a first compartment (6) and a second compartment (8);
- a reversible bio-electrode (10) that is placed in the first compartment (6) and comprises a microbial biosystem capable of performing in a charging state a charging operation, and performing in a discharging state a discharging operation; and
- a counter electrode (14) that is placed in the second compartment (8) and is electrically connectable in a circuit (16) with the reversible bio-electrode (10);
- performing a charging operation by providing electrons to the reversible bio-electrode (10) to perform a reduction operation and converting electrical energy into chemical energy; and
- performing a discharging operation by extracting electrons from the reversible bio-electrode (10) to perform an oxidation reaction and converting chemical energy into electrical energy.

2. Method according to claim 1, further providing the bioelectrochemical energy storage device (2) with an ion-exchange membrane separating the first (6) and second (8) compartment, wherein the ion-exchange membrane is preferably a cation exchange membrane, wherein the cation-exchange membrane is preferably a proton selective membrane.

3. Method according to one or more of the foregoing claims, wherein the counter electrode (14) of the device (2) comprises a capacitive electrode.

4. Method according to one or more of the foregoing claims, further providing the first compartment (6) with an organic material input (22).

5. Method according to one or more of the foregoing claims, wherein performing both the oxidation and reduction reactions in the microbial biosystem comprising a unitary bio-system.

6. Method according to one or more of the foregoing claims, further providing the microbial bio-system as a multiple bio-system with a first bio-subsystem capable of performing the oxidation reaction and a second bio-subsystem, at least partly different from the first bio-subsystem, capable of performing the reduction reaction.

7. Method according to one or more of the foregoing claims, wherein the method stores above 10 kWh/m³, more preferably above 12.5 kWh/m³, and most preferably above 15 kWh/m³.

8. Method according to one or more of the foregoing claims, wherein the first (6) and/or second (8) compartments are separated into an oxidation sub-compartment and a reduction sub-compartment.

9. Method according to one or more of the foregoing claims, comprising the steps of performing the charging operation and/or discharging operations under anaerobic conditions.

10. Method according to one or more of the foregoing claims, further comprising the step of providing the first compartment (6) with carbohydrates capable of anaerobic oxidation for converting chemical energy into electrical energy, and/or comprising the step of providing the first compartment (6) with acetate, and/or comprising the step of providing the first compartment (6) with organic material to add additional energy to the system and/or recharge the system, and wherein preferably providing ethanol for recharging the system.

11. Method according to one or more of the foregoing claims, wherein performing the charging step at a time period of energy surplus and performing the discharging step at a time period of energy shortage enabling local semi off-grid or off-grid energy storage.

12. Bioelectrochemical energy storage device (2), comprising:
- a housing having a first compartment (6) and a second compartment (8);
- a reversible bio-electrode (10) that is placed in the first compartment (6) and comprises a microbial biosystem capable of performing in a charging state a charging operation involving a reduction reaction converting electrical energy into chemical energy, and performing in a discharging state a discharging operation involving an oxidation reaction converting chemical energy into electrical energy; and
- a counter electrode (14) that is placed in the second compartment (8) and is electrically connectable in a circuit (16) with the reversible bio-electrode (10).

13. Bioelectrochemical energy storage device (2) according to claim 12, wherein the microbial biosystem comprises a unitary bio-system capable of performing both the oxidation and reduction reactions.

14. Bioelectrochemical energy storage device (2) according to claim 12 or 13, wherein the microbial bio-system comprises a multiple bio-system with a first bio-subsystem capable of performing the oxidation reaction and a second bio-subsystem, at least partly different from the first bio-subsystem, capable of performing the reduction reaction.

15. Bioelectrochemical energy storage device (2) according to claim 12, 13 or 14, wherein the reversible bio-electrode (10) comprises a charging sub-electrode comprising a first microbial biosystem capable of performing in a charging state a charging operation involving a reduction reaction converting electrical energy into chemical energy, and comprising a discharging sub-electrode comprising a second microbial biosystem capable of performing in a discharging state a discharging operation involving an oxidation reaction converting chemical energy into electrical energy.

## Patentansprüche

1. Verfahren zur bioelektrochemischen Energiespeicherung und Erzeugung elektrischer Energie mit den Schritten:
- Vorsehen einer bioelektrochemischen Energiespeichervorrichtung (2), wobei die Vorrichtung (2) aufweist:
- ein Gehäuse (4) mit einer ersten Abteilung (6) und einer zweiten Abteilung (8),
- eine reversible Bioelektrode (10), die in der ersten Abteilung (6) angeordnet ist und ein mikrobielles Biosystem aufweist, das in einem Ladezustand einen Ladevorgang durchführen kann und in einem Entladezustand einen Entladevorgang, und
- eine Gegenelektrode (14), die in der zweiten Abteilung (8) angeordnet ist und elektrisch in einer Schaltung (16) mit der reversiblen Bioelektrode (10) verbindbar ist,
- Durchführen eines Ladevorgangs durch Liefern von Elektronen an die reversible Bioelektrode (10), um einen Reduktionsvorgang durchzuführen und elektrische Energie in chemische Energie zu wandeln, und
- Durchführen eines Entladevorgangs durch Extrahieren von Elektronen aus der reversiblen Bioelektrode (10), um eine Oxidationsreaktion durchzuführen und chemische Energie in elektrische Energie zu wandeln.

2. Verfahren Anspruch 1 mit dem Versehen der bioelektrochemischen Energiespeichervorrichtung (2) mit einer Ionen-Austauschmembran, die die erste (6) und die zweite (8) Abteilung voneinander separiert, wobei die Ionen-Austauschmembran vorzugsweise eine Kationen-Austauschmembran ist, wobei die Kationen-Austauschmembran vorzugsweise eine Protonen-selektive Membran ist.

3. Verfahren nach einem oder mehreren der vorstehenden Ansprüche, wobei die Gegenelektrode (14) der Vorrichtung (2) eine kapazitive Elektrode aufweist.

4. Verfahren nach einem oder mehreren der vorstehenden Ansprüche mit ferner dem Versehen der ersten Abteilung (6) mit einem Eingang (22) für organisches Material.

5. Verfahren nach einem oder mehreren der vorstehenden Ansprüche mit dem Durchführen sowohl der Oxidationsreaktion als auch der Reduktionsreaktion in dem mikrobiellen Biosystem, das ein unitäres Biosystem aufweist.

6. Verfahren nach einem oder mehreren der vorstehenden Ansprüche mit ferner dem Vorsehen des mikrobiellen Biosystems als ein multiples Biosystem mit einem ersten Bio-Untersystem, das die Oxidationsreaktion durchführen kann, und einem zweiten Bio-Untersystem, das sich mindestens teilweise von dem ersten Bio-Untersystem unterscheidet, das die Reduktionsreaktion durchführen kann.

7. Verfahren nach einem oder mehreren der vorstehenden Ansprüche, wobei das Verfahren oberhalb von 10 kWh/m³, weiter bevorzugt oberhalb von 12,5 kWh/m³ und insbesondere vorzugsweise oberhalb von 15 kWh/m³ speichert.

8. Verfahren nach einem oder mehreren der vorstehenden Ansprüche, wobei die erste (6) und/oder die zweite (8) Abteilung in eine Oxidations-Unterabteilung und eine Reduktions-Unterabteilung getrennt sind.

9. Verfahren nach einem oder mehreren der vorstehenden Ansprüche mit den Schritten der Durchführung des Ladevorgangs und/oder des Entladevorgangs unter anaeroben Bedingungen.

10. Verfahren nach einem oder mehreren der vorstehenden Ansprüche mit ferner dem Schritt des Versehens der ersten Abteilung (6) mit Kohlehydraten, die eine anaerobe Oxidation durchführen können, um chemische Energie in elektrische Energie zu wandeln, und/oder mit dem Schritt des Versehens der ersten Abteilung (6) mit einem Azetat und/oder mit dem Schritt des Versehens der ersten Abteilung (6) mit einem organischen Material, um dem System zusätzliche Energie zuzuführen und/oder das System aufzuladen, und wobei vorzugsweise Ethanol zum Aufladen des Systems vorgesehen ist.

11. Verfahren nach einem oder mehreren der vorstehenden Ansprüche, wobei der Ladeschritt in einer Zeitspanne von Energieüberschuss durchgeführt wird und der Entladeschritt in einer Zeitspanne von Energiemangel durchgeführt wird, um somit eine lokale halb vom Netz getrennte oder vom Netz getrennte Energiespeicherung zu ermöglichen.

12. Bioelektrochemische Energiespeichervorrichtung (2) mit:
- einem Gehäuse mit einer ersten Abteilung (6) und einer zweiten Abteilung (8),
- einer reversiblen Bioelektrode (10), die in der ersten Abteilung (6) angeordnet ist und ein mikrobielles Biosystem aufweist, das in einem Ladezustand einen Ladevorgang einschließlich einer Reduktionsreaktion durchführen kann, die elektrische Energie in chemische Energie wandelt, und in einem Entladezustand einen Entladevorgang einschließlich einer Oxidationsreaktion durchführen kann, die chemische Energie in elektrische Energie wandelt, und
- einer Gegenelektrode (14), die in der zweiten Abteilung (8) angeordnet ist und elektrisch mit einer Schaltung (16) mit der reversiblen Bioelektrode (10) verbindbar ist.

13. Bioelektrochemische Energiespeichervorrichtung (2) nach Anspruch 12, wobei das mikrobielle System ein unitäres Biosystem aufweist, das sowohl die Oxidationsreaktion als auch die Reduktionsreaktion durchführen kann.

14. Bioelektrochemische Energiespeichervorrichtung (2) nach Anspruch 12 oder 13, wobei das mikrobielle Biosystem ein multiples Biosystem mit einem ersten Bio-Untersystem aufweist, das die Oxidationsreaktion durchführen kann, und ein zweites Bio-Untersystem, das mindestens teilweise unterschiedlich zu dem ersten Biosystem ist, das die Reduktionsreaktion durchführen kann.

15. Bioelektrochemische Energiespeichervorrichtung (2) nach Anspruch 12, 13 oder 14, wobei die reversible Bioelektrode (10) eine Lade-Unterelektrode mit einem ersten mikrobiellen Biosystem aufweist, das in einem Ladezustand einen Ladevorgang einschließlich einer Reduktionsreaktion durchführen kann, die elektrische Energie in chemische Energie wandelt, und mit einer Entlade-Unterelektrode mit einem zweiten mikrobiellen Biosystem, das in einem Entladezustand einen Entladevorgang einschließlich einer Oxidationsreaktion durchführen kann, die chemische Energie in elektrische Energie wandelt.

## Revendications

1. Procédé de stockage d'énergie bio-électrochimique et de génération d'énergie électrique, comprenant les étapes de :
- fourniture d'un dispositif de stockage d'énergie bio-électrochimique (2), le dispositif (2) comprenant :
- un logement (4) ayant un premier compartiment (6) et un second compartiment (8) ;
- une bio-électrode réversible (10) qui est placée dans le premier compartiment (6) et comprend un biosystème microbien capable de réaliser dans un état de chargement une opération de chargement, et de réaliser dans un état de déchargement une opération de déchargement ; et
- une contre-électrode (14) qui est placée dans le second compartiment (8) et est connectable électriquement dans un circuit (16) avec la bio-électrode réversible (10) ;
- la réalisation d'une opération de chargement en fournissant des électrons à la bio-électrode réversible (10) pour réaliser une opération de réduction et convertir de l'énergie électrique en énergie chimique ; et
- réaliser une opération de déchargement en extrayant des électrons de la bio-électrode réversible (10) pour réaliser une réaction d'oxydation et convertir de l'énergie chimique en énergie électrique.

2. Procédé selon la revendication 1, fournissant en outre au dispositif de stockage d'énergie bio-électrochimique (2) une membrane échangeuse d'ions séparant les premier (6) et second (8) compartiments, dans lequel la membrane échangeuse d'ions est de préférence une membrane échangeuse de cations, dans lequel la membrane échangeuse de cations est de préférence une membrane sélective de protons.

3. Procédé selon une ou plusieurs des revendications précédentes, dans lequel la contre-électrode (14) du dispositif (2) comprend une électrode capacitive.

4. Procédé selon une ou plusieurs des revendications précédentes, fournissant en outre au premier compartiment (6) un apport de matière organique (22) .

5. Procédé selon une ou plusieurs des revendications précédentes, dans lequel sont réalisées à la fois les réactions d'oxydation et de réduction dans le biosystème microbien comprenant un biosystème unitaire.

6. Procédé selon une ou plusieurs des revendications précédentes, fournissant en outre au biosystème microbien en tant qu'un biosystème multiple un premier sous-système biologique capable de réaliser la réaction d'oxydation et un second sous-système biologique, au moins partiellement différent du premier sous-système biologique, capable de réaliser la réaction de réduction.

7. Procédé selon une ou plusieurs des revendications précédentes, dans lequel le procédé stocke plus de 10 kWh/m³, de préférence encore plus de 12,5 kWh/m³, et de manière préférée entre toutes plus de 15 kWh/m³.

8. Procédé selon une ou plusieurs des revendications précédentes, dans lequel les premier (6) et/ou second (8) compartiments sont séparés en un sous-compartiment d'oxydation et un sous-compartiment de réduction.

9. Procédé selon une ou plusieurs des revendications précédentes, comprenant les étapes de réalisation des opérations de chargement et/ou de déchargement dans des conditions anaérobies.

10. Procédé selon une ou plusieurs des revendications précédentes, comprenant en outre l'étape de fourniture au premier compartiment (6) d'hydrates de carbone capables d'oxydation anaérobie pour convertir l'énergie chimique en énergie électrique, et/ou comprenant l'étape de fourniture d'acétate au premier compartiment (6), et/ou comprenant l'étape de fourniture de matière organique au premier compartiment (6) pour ajouter de l'énergie supplémentaire au système et/ou recharger le système, et de préférence de fourniture d'éthanol pour recharger le système.

11. Procédé selon une ou plusieurs des revendications précédentes, dans lequel la réalisation de l'étape de chargement à un moment de surplus d'énergie et la réalisation de l'étape de déchargement à un moment de pénurie d'énergie permettent le stockage local d'énergie à moitié hors réseau ou hors réseau.

12. Dispositif de stockage d'énergie bio-électrochimique (2), comprenant :
- un logement ayant un premier compartiment (6) et un second compartiment (8) ;
- une bio-électrode réversible (10) qui est placée dans le premier compartiment (6) et comprend un biosystème microbien capable de réaliser dans un état de chargement une opération de chargement impliquant une réaction de réduction convertissant de l'énergie électrique en énergie chimique, et de réaliser dans un état de déchargement une opération de déchargement impliquant une réaction d'oxydation convertissant de l'énergie chimique en énergie électrique ; et
- une contre-électrode (14) qui est placée dans le second compartiment (8) et est connectable électriquement dans un circuit (16) avec la bio-électrode réversible (10).

13. Dispositif de stockage d'énergie bio-électrochimique (2) selon la revendication 12, dans lequel le biosystème microbien comprend un biosystème unitaire capable de réaliser à la fois les réactions d'oxydation et de réduction.

14. Dispositif de stockage d'énergie bio-électrochimique (2) selon la revendication 12 ou 13, dans lequel le biosystème microbien comprend un biosystème multiple avec un premier sous-système biologique capable de réaliser la réaction d'oxydation et un second sous-système biologique, au moins partiellement différent du premier sous-système biologique, capable de réaliser la réaction de réduction.

15. Dispositif de stockage d'énergie bio-électrochimique (2) selon la revendication 12, 13 ou 14, dans lequel la bio-électrode réversible (10) comprend une sous-électrode de chargement comprenant un premier biosystème microbien capable de réaliser dans un état de chargement une opération de chargement impliquant une réaction de réduction convertissant de l'énergie électrique en énergie chimique, et comprenant une sous-électrode de déchargement comprenant un second biosystème microbien capable de réaliser dans un état de déchargement une opération de déchargement impliquant une réaction d'oxydation convertissant de l'énergie chimique en énergie électrique.
